# EUROPÄISCHE PATENTSCHRIFT

(11) **EP 3 670 273 B1**
(45) Veröffentlichungstag und Bekanntmachung des Hinweises auf die Patenterteilung: **19.01.2022**
(21) Anmeldenummer: 19209077.7
(22) Anmeldetag: 14.11.2019
(51) Int. Cl.: B60R 19/24

(54) **MEHRTEILIGES VERKLEIDUNGSTEIL FÜR EIN KRAFTFAHRZEUG**
CLADDING PART FOR A MOTOR VEHICLE WITH MULTIPLE PARTS
PIÈCE D'HABILLAGE EN PLUSIEURS PARTIES POUR UN VÉHICULE AUTOMOBILE

(30) Priorität: 17.12.2018 DE 202018107204 U
(43) Veröffentlichungstag der Anmeldung: 24.06.2020
(73) Patentinhaber: REHAU AG + Co, 95111 Rehau (DE)
(72) Erfinder: Bayer, Christian, 95213 Münchberg (DE); Schneider, Sebastian, 08523 Plauen (DE)

(56) Entgegenhaltungen:
- EP-A1- 2 127 955
- WO-A1-02/22403
- DE-A1-102005 029 544
- GB-A- 2 274 872

## Beschreibung

Die vorliegende Erfindung betrifft ein mehrteiliges Verkleidungsteil für ein Kraftfahrzeug, umfassend:
- ein erstes länglich ausgebildetes Verkleidungselement mit einer bestimmungsgemäßen Sichtseite und einer der Sichtseite gegenüberliegenden Rückseite, sowie einem oberen Längsrand und einem unteren Längsrand,
- ein zweites länglich ausgebildetes Verkleidungselement mit einer bestimmungsgemäßen Sichtseite und einer der Sichtseite gegenüberliegenden Rückseite, sowie einem oberen Längsrand,
- ein das erste Verkleidungselement verstärkendes und an der Rückseite des ersten Verkleidungselementes angeordnetes Versteifungselement,
wobei der untere Längsrand des ersten Verkleidungselements mit dem oberen Längsrand des zweiten Verkleidungselementes verbunden ist.

Ein mehrteiliges Verkleidungsteil ist der Anmelderin durch offenkundige Vorbenutzung in dem Fahrzeug Audi Q7 der Baureihe 4M bekannt, bei welcher das erste Verkleidungselement unmittelbar an dem zweiten Verkleidungselement befestigt ist. Eine direkte Befestigung des ersten Verkleidungselements an dem zweiten Verkleidungselement bringt den Nachteil, dass es bei hohen Geschwindigkeiten zu einem Flattern des zweiten Verkleidungselements oder zum durchhängen des zweiten Verkleidungselements kommen kann. Weitere Beispiele für derartige Verkleidungsteile können den Druckschriften EP 2 127 955 A1, DE 10 2005 029 544 A1, WO 02/22403 A1 und GB 2 274 872 A entnommen werden. Die EP 2 127 955 A1 entspricht dabei dem Oberbegriff des unabhängigen Anspruchs 1.

Aufgabe der vorliegenden Erfindung ist es daher ein mehrteiliges Verkleidungsteil anzugeben, dass einen festeren Verbund der einzelnen Verkleidungselemente untereinander aufweist.

Diese Aufgabe wird vorliegend gelöst durch ein mehrteiliges Verkleidungsteil für ein Kraftfahrzeug, umfassend:
- ein erstes länglich ausgebildetes Verkleidungselement mit einer bestimmungsgemäßen Sichtseite und einer der Sichtseite gegenüberliegenden Rückseite, sowie einem oberen Längsrand und einem unteren Längsrand,
- ein zweites länglich ausgebildetes Verkleidungselement mit einer bestimmungsgemäßen Sichtseite und einer der Sichtseite gegenüberliegenden Rückseite, sowie einem oberen Längsrand,
- ein das erste Verkleidungselement verstärkendes und an der Rückseite des ersten Verkleidungselementes angeordnetes Versteifungselement,
wobei der untere Längsrand des ersten Verkleidungselements mit dem oberen Längsrand des zweiten Verkleidungselementes verbunden ist, wobei erfindungsgemäß von dem oberen Längsrand des zweiten Verkleidungselements wenigstens ein laschenförmiges Rastelement von der Rückseite aus nach hinten absteht und in eine Rastelementaufnahme in dem Versteifungselement eingreift und dort über einen hinterschnittigen Rastvorsprung in der Rastelementaufnahme fixiert ist und, dass der untere Längsrand des ersten Verkleidungselementes zwischen dem Versteifungselement und dem oberen Längsrand des zweiten Verkleidungselements geklemmt ist, um die beiden Verkleidungselemente miteinander zu verbinden.

Durch die erfindungsgemäße Verbindung des Versteifungselements mit dem zweiten Verkleidungselement bzw. mit dem Verbindungsbereich von dem ersten Verkleidungselement mit dem zweiten Verkleidungselement, also dem unteren Längsrand des ersten Verkleidungselements und dem oberen Längsrand des zweiten Verkleidungselements, erhöht sich die Gesamtsteifigkeit des mehrteiligen Verkleidungsteils erheblich, sodass ein Flattern oder ein Durchgängen des zweiten Verkleidungselements des Verkleidungsteils wirksam verhindert wird.

Bevorzugt ist das Versteifungselement zusätzlich mit dem oberen Längsrand des ersten Verkleidungselements verbunden ist. Hierdurch erhöht sich die Gesamtsteifigkeit des Verkleidungsteils weiter.

Weiter bevorzugt ist oder sind das erste Verkleidungselement und/oder das zweite Verkleidungselement und/oder das Versteifungselement jeweils einstückig ausgebildet (d.h. die Elemente sind nicht zusammen einstückig ausgebildet, sondern jeweils für sich einstückig ausgebildet). Hierbei kann das erste Verkleidungselement und/oder das zweite Verkleidungselement und/oder das Versteifungselement bevorzugt in einem Spritzgussverfahren oder in einem generativen Fertigungsverfahren hergestellt sein. Ein generatives Fertigungsverfahren kann beispielsweise ein 3D-Druckverfahren umfassen.

Der untere Längsrand des ersten Verkleidungselements kann bereichsweise einen im Querschnitt C-förmig oder U-förmig ausgebildeten Kanal aufweisen. Das Versteifungselement kann diesen Kanal zumindest abschnittsweise außenseitig übergreifen. Hierfür kann das Versteifungselement einen übergreifenden Steg aufweisen. Ein C-förmig oder U-förmig ausgebildete Kanal erhöht zusätzlich die Steifigkeit des unteren Längsrand des ersten Verkleidungselements und somit gleichzeitig den Verbund zwischen dem ersten Verkleidungselement, dem zweiten Verkleidungselement und dem Versteifungselement. Insbesondere wenn das Verkleidungselement den C-förmig oder U-förmig ausgebildeten Kanal zumindest abschnittsweise außenseitig übergreift erhöht sich die Steifigkeit erneut.

Der Kanal kann eine Öffnung aufweisen und das laschenförmige Rastelement durch diese Öffnung durch den Kanal hindurchragen. Die Rastverbindung zwischen dem Rastelement des zweiten Verkleidungselements und der Rastelementaufnahme in dem Versteifungselement schließt dann zwischen sich den C-förmig oder U-förmig ausgebildeten Kanal ein, sodass die vorgenannten Vorteile bezüglich der Steifigkeit unmittelbar im Bereich der Rastverbindung zur Geltung kommen.

Bevorzugt kann wenigstens das Versteifungselement aus einem geschäumten und/oder porösen Material bestehen. Aufgrund der erfindungsgemäßen Ausbildung des mehrteiligen Verkleidungsteils verringert sich die lokale Belastung auf das Versteifungselement, da die von den Verkleidungselementen hervorgerufene Gewichtskraft sehr viel gleichmäßiger auf das Versteifungselement verteilt werden. Hierdurch ist es möglich ein Material für das Versteifungselement zu wählen, dass eine geringere Anforderung an die Festigkeit aufweist, gleichzeitig jedoch ein geringeres Eigengewicht des Versteifungselements ermöglicht.

Das erste Verkleidungselement und/oder das zweite Verkleidungselement und/oder das Versteifungselement kann oder können aus einem thermoplastischen Werkstoff bestehen. Der thermoplastische Werkstoff kann insbesondere Polypropylen oder Polyethylen umfassen.

Teil der Erfindung ist ferner ein Kraftfahrzeug mit einem mehrteiligen Verkleidungsteil nach einem der Ansprüche 1 bis 9 und/oder einem wie vorstehend beschriebenen mehrteiligen Verkleidungsteil.

Im Folgenden wird die Erfindung anhand lediglich ein Ausführungsbeispiel darstellender Zeichnungen erläutert. Es zeigen schematisch:
- Fig. 1:: Draufsichten auf die Verkleidungselemente und das Versteifungselement des Verkleidungsteils;
- Fig. 2:: eine Draufsicht auf die Sichtseite des zusammengebauten Verkleidungsteils;
- Fig. 3:: eine Detailansicht der Rückseite eines Bereichs aus Fig. 2;
- Fig. 4:: eine Querschnittsdarstellung der Schnittlinie X-X aus Fig. 2;

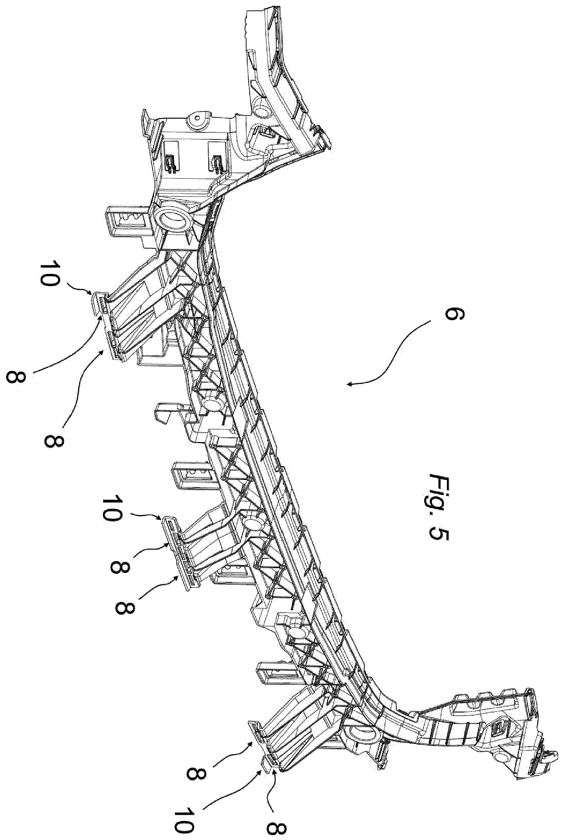

- Fig. 5:: eine räumliche Darstellung des Versteifungselements.

In den Figuren werden gleiche oder funktionsgleiche Elemente mit den gleichen Bezugszeichen versehen.

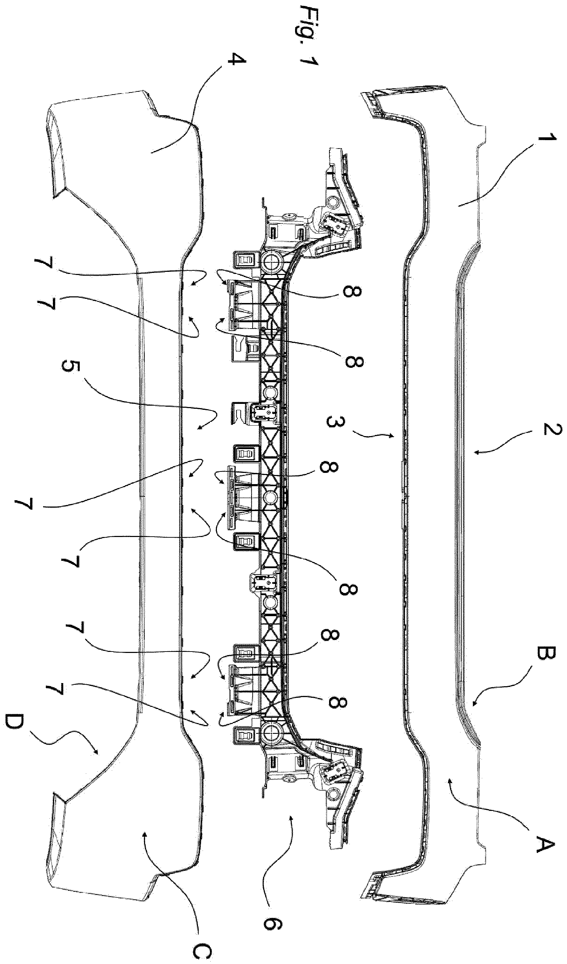

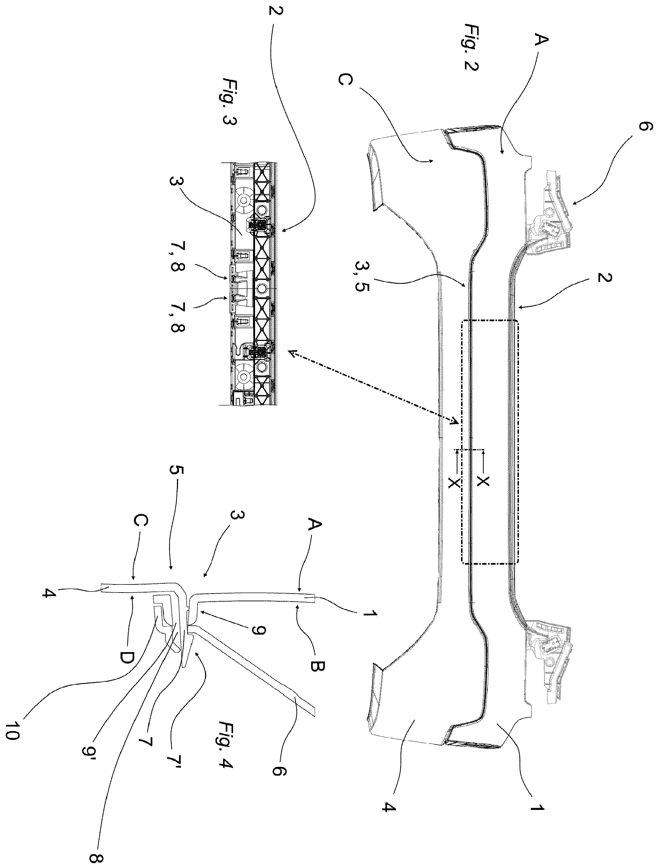

Die Fig. 1 zeigt die Bestandteile eines mehrteiligen Verkleidungsteils für ein Kraftfahrzeug, umfassend ein erstes länglich ausgebildetes Verkleidungselement 1 mit einer bestimmungsgemäßen Sichtseite A und einer der Sichtseite A gegenüberliegenden Rückseite B, sowie einem oberen Längsrand 2 und einem unteren Längsrand 3. Das Verkleidungsteil umfasst ferner ein zweites länglich ausgebildetes Verkleidungselement 4 mit einer bestimmungsgemäßen Sichtseite C und einer der Sichtseite C gegenüberliegenden Rückseite D, sowie einem oberen Längsrand 5. Zusätzlich ist ein das erste Verkleidungselement 1 verstärkendes und an der Rückseite B des ersten Verkleidungselements 1 angeordnetes Versteifungselement 6 vorgesehen (vgl. Detailansicht in Fig. 3). In Fig. 2 ist erkennbar, dass der untere Längsrand 3 des ersten Verkleidungselements 1 mit dem oberen Längsrand 5 des zweiten Verkleidungselementes 4 verbunden ist. In Fig. 4 ist im Querschnitt entlang der Linie X-X aus Fig. 2 erkennbar, dass von dem oberen Längsrand 5 des zweiten Verkleidungselements 4 wenigstens ein laschenförmiges Rastelement 7 von der Rückseite D aus nach hinten absteht und in eine Rastelementaufnahme 8 in dem Versteifungselement 6 eingreift. Dort ist das Rastelement 7 über einen hinterschnittigen Rastvorsprung 7' in der Rastelementaufnahme 8 fixiert. Der untere Längsrand 3 des ersten Verkleidungselementes 1 ist zwischen dem Versteifungselement 6 und dem oberen Längsrand 5 des zweiten Verkleidungselements 4 geklemmt, um die beiden Verkleidungselemente 1, 4 miteinander zu verbinden.

Das Versteifungselement 6 ist zusätzlich mit dem oberen Längsrand 2 des ersten Verkleidungselements 1 verbunden (vgl. Fig. 3).

Das erste Verkleidungselement 1 und das zweite Verkleidungselement 4 und das Versteifungselement 6 sind jeweils einstückig ausgebildet. Das erste Verkleidungselement 1 und das zweite Verkleidungselement 4 und das Versteifungselement 6 sind hierbei in einem Spritzgussverfahren oder in einem generativen Fertigungsverfahren hergestellt.

In Fig. 4 ist ersichtlich, dass der untere Längsrand 3 des ersten Verkleidungselements 1 bereichsweise einen im Querschnitt C-förmig oder U-förmig ausgebildeten Kanal 9 aufweist. Das Versteifungselement 6 übergreift diesen Kanal 9 zumindest abschnittsweise außenseitig. Hierbei greift ein flacher Steg 10 über den Kanal 9. Der Kanal 9 weist eine Öffnung 9' auf und das laschenförmige Rastelement 7 ragt durch diese Öffnung 9' durch den Kanal 9 hindurch.

Wenigstens das Versteifungselement 6 besteht aus einem geschäumten und/oder porösen Material. Das erste Verkleidungselement 1 und das zweite Verkleidungselement 2 und das Versteifungselement 6 besteht aus einem thermoplastischen Werkstoff, wobei der thermoplastische Werkstoff Polypropylen oder Polyethylen umfasst.

## Patentansprüche

1. Mehrteiliges Verkleidungsteil für ein Kraftfahrzeug, umfassend:
- ein erstes länglich ausgebildetes Verkleidungselement (1) mit einer bestimmungsgemäßen Sichtseite (A) und einer der Sichtseite (A) gegenüberliegenden Rückseite (B), sowie einem oberen Längsrand (2) und einem unteren Längsrand (3),
- ein zweites länglich ausgebildetes Verkleidungselement (4) mit einer bestimmungsgemäßen Sichtseite (C) und einer der Sichtseite (C) gegenüberliegenden Rückseite (D), sowie einem oberen Längsrand (5),
- ein das erste Verkleidungselement (1) verstärkendes Versteifungselement (6),
wobei der untere Längsrand (3) des ersten Verkleidungselements (1) mit dem oberen Längsrand (5) des zweiten Verkleidungselementes (4) verbunden ist,
wobei von dem oberen Längsrand (5) des zweiten Verkleidungselements (4) wenigstens ein laschenförmiges Rastelement (7) von der Rückseite (D) aus nach hinten absteht und in eine Rastelementaufnahme (8) in dem Versteifungselement (6) eingreift und dort über einen hinterschnittigen Rastvorsprung (7') in der Rastelementaufnahme (8) fixiert ist,
**dadurch gekennzeichnet, dass**
das erste Verkleidungselement (1) verstärkende Versteifungselement (6) an der Rückseite (B) des ersten Verkleidungselementes (1) angeordnet ist, und
der untere Längsrand (3) des ersten Verkleidungselementes (1) zwischen dem Versteifungselement (6) und dem oberen Längsrand (5) des zweiten Verkleidungselements (4) geklemmt ist, um die beiden Verkleidungselemente (1, 4) miteinander zu verbinden.

2. Mehrteiliges Verkleidungsteil nach Anspruch 1, **dadurch gekennzeichnet, dass** das Versteifungselement (6) zusätzlich mit dem oberen Längsrand (2) des ersten Verkleidungselements (1) verbunden ist.

3. Mehrteiliges Verkleidungsteil nach einem der vorstehenden Ansprüche, **dadurch gekennzeichnet, dass** das erste Verkleidungselement (1) und/oder das zweite Verkleidungselement (4) und/oder das Versteifungselement (6) jeweils einstückig ausgebildet ist oder sind.

4. Mehrteiliges Verkleidungsteil nach Anspruch 3, **dadurch gekennzeichnet, dass** das erste Verkleidungselement (1) und/oder das zweite Verkleidungselement (4) und/oder das Versteifungselement (6) in einem Spritzgussverfahren oder in einem generativen Fertigungsverfahren hergestellt ist.

5. Mehrteiliges Verkleidungsteil nach einem der vorstehenden Ansprüche, **dadurch gekennzeichnet, dass** der untere Längsrand (3) des ersten Verkleidungselements (1) bereichsweise einen im Querschnitt C-förmig oder U-förmig ausgebildeten Kanal (9) aufweist und, dass das Versteifungselement (6) diesen Kanal (9) zumindest abschnittsweise außenseitig übergreift.

6. Mehrteiliges Verkleidungsteil nach Anspruch 5, **dadurch gekennzeichnet, dass** der Kanal (9) eine Öffnung (9') aufweist und das laschenförmige Rastelement (7) durch diese Öffnung (9') durch den Kanal (9) hindurchragt.

7. Mehrteiliges Verkleidungsteil nach einem der vorstehenden Ansprüche, **dadurch gekennzeichnet, dass** wenigstens das Versteifungselement (6) aus einem geschäumten und/oder porösen Material besteht.

8. Mehrteiliges Verkleidungsteil nach einem der vorstehenden Ansprüche, **dadurch gekennzeichnet, dass** das erste Verkleidungselement (1) und/oder das zweite Verkleidungselement (2) und/oder das Versteifungselement (6) aus einem thermoplastischen Werkstoff besteht.

9. Mehrteiliges Verkleidungsteil nach Anspruch 8, **dadurch gekennzeichnet, dass** der thermoplastische Werkstoff Polypropylen oder Polyethylen umfasst.

10. Kraftfahrzeug mit einem mehrteiligen Verkleidungsteil nach einem der vorstehenden Ansprüche.

## Claims

1. Multi-part trim part for a motor vehicle, comprising:
- a first elongate trim element (1) having an intended visible side (A) and a reverse side (B) opposite the visible side (A), as well as with an upper longitudinal edge (2) and a lower longitudinal edge (3),
- a second elongate trim element (4) having an intended visible side (C) and a reverse side (D) opposite the visible side (C), as well as with an upper longitudinal edge (5),
- a stiffening element (6) that reinforces the first trim element (1),
wherein the lower longitudinal edge (3) of the first trim element (1) is connected to the upper longitudinal edge (5) of the second trim element (4),
wherein at least one tab-like latching element (7) projects rearwards from the upper longitudinal edge (5) of the second trim element (4) on the reverse side (D) and engages in a latching element receptacle (8) in the stiffening element (6) and is fixed there by an undercut latching projection (7') in the latching element receptacle (8),
**characterised in that**
the stiffening element (6) that reinforces the first trim element (1) is arranged on the reverse side (B) of the first trim element (1), and
the lower longitudinal edge (3) of the first trim element (1) is clamped between the stiffening element (6) and the upper longitudinal edge (5) of the second trim element (4) so as to interconnect the two trim elements (1, 4).

2. Multi-part trim part according to claim 1, **characterised in that** the stiffening element (6) is additionally connected to the upper longitudinal edge (2) of the first trim element (1).

3. Multi-part trim part according to one of the preceding claims, **characterised in that** the first trim element (1) and/or the second trim element (4) and/or the stiffening element (6) is or are each formed in one piece.

4. Multi-part trim part according to claim 3, **characterised in that** the first trim element (1) and/or the second trim element (4) and/or the stiffening element (6) is produced in an injection moulding process or in an additive manufacturing process.

5. Multi-part trim part according to one of the preceding claims, **characterised in that** the lower longitudinal edge (3) of the first trim element (1) comprises in some regions a channel (9) with a C-shaped or U-shaped cross-section and that the stiffening element (6) overlaps at least some portions of the outside of this channel (9).

6. Multi-part trim part according to claim 5, **characterised in that** the channel (9) comprises an opening (9') and the tab-like latching element (7) protrudes through the channel (9) through this opening (9').

7. Multi-part trim part according to one of the preceding claims, **characterised in that** at least the stiffening element (6) consists of a foamed and/or porous material.

8. Multi-part trim part according to one of the preceding claims, **characterised in that** the first trim element (1) and/or the second trim element (2) and/or the stiffening element (6) consists of a thermoplastic material.

9. Multi-part trim part according to claim 8, **characterised in that** the thermoplastic material comprises polypropylene or polyethylene.

10. Motor vehicle having a multi-part trim part according to one of the preceding claims.

## Revendications

1. Partie d'habillage en plusieurs parties pour un véhicule à moteur, comprenant :
- un premier élément d'habillage (1) réalisé de manière allongée avec un côté visible (A) conformément à l'usage prévu et un côté arrière (B) opposé au côté visible (A) ainsi qu'un bord longitudinal supérieur (2) et un bord longitudinal inférieur (3),
- un deuxième élément d'habillage (4) réalisé de manière allongée avec un côté visible (C) conformément à l'usage prévu et un côté arrière (D) opposé au côté visible (C), ainsi qu'un bord longitudinal supérieur (5),
- un élément de rigidification (6) renforçant le premier élément d'habillage (1),
dans laquelle le bord longitudinal inférieur (3) du premier élément d'habillage (1) est relié au bord longitudinal supérieur (5) du deuxième élément d'habillage (4),
dans laquelle au moins un élément d'enclenchement (7) en forme de languette fait saillie depuis le côté arrière (D), vers l'arrière, du bord longitudinal supérieur (5) du deuxième élément d'habillage (4) et vient en prise avec un logement d'élément d'enclenchement (8) dans l'élément de rigidification (6) et y est bloqué par l'intermédiaire d'une saillie d'enclenchement (7') contre-dépouillée dans le logement d'élément d'enclenchement (8),
**caractérisée en ce que**
l'élément de rigidification (6) renforçant le premier élément d'habillage (1) est disposé sur le côté arrière (B) du premier élément d'habillage (1), et
le bord longitudinal inférieur (3) du premier élément d'habillage (1) est coincé entre l'élément de rigidification (6) et le bord longitudinal supérieur (5) du deuxième élément d'habillage (4) pour relier les deux éléments d'habillage (1, 4) l'un à l'autre.

2. Partie d'habillage en plusieurs parties selon la revendication 1, **caractérisée en ce que** l'élément de rigidification (6) est relié en supplément au bord longitudinal supérieur (2) du premier élément d'habillage (1).

3. Partie d'habillage en plusieurs parties selon l'une quelconque des revendications précédentes, **caractérisée en ce que** le premier élément d'habillage (1) et/ou le deuxième élément d'habillage (4) et/ou l'élément de rigidification (6) est ou sont réalisés respectivement d'un seul tenant.

4. Partie d'habillage en plusieurs parties selon la revendication 3, **caractérisée en ce que** le premier élément d'habillage (1) et/ou le deuxième élément d'habillage (4) et/ou l'élément de rigidification (6) sont fabriqués lors d'un procédé de moulage par injection ou lors d'un procédé de fabrication générative.

5. Partie d'habillage en plusieurs parties selon l'une quelconque des revendications précédentes, **caractérisée en ce que** le bord longitudinal inférieur (3) du premier élément d'habillage (1) présente par endroits un canal (9) réalisé dans la section transversale en forme de C ou en forme de U, et que l'élément de rigidification (6) dépasse au moins par endroits ledit canal (9) côté extérieur.

6. Partie d'habillage en plusieurs parties selon la revendication 5, **caractérisée en ce que** le canal (9) présente une ouverture (9') et l'élément d'enclenchement (7) en forme de languette dépasse par ladite ouverture (9') à travers le canal (9) de part en part.

7. Partie d'habillage en plusieurs parties selon l'une quelconque des revendications précédentes, **caractérisée en ce qu'**au moins l'élément de rigidification (6) consiste en un matériau expansé et/ou poreux.

8. Partie d'habillage en plusieurs parties selon l'une quelconque des revendications précédentes, **caractérisée en ce que** le premier élément d'habillage (1) et/ou le deuxième élément d'habillage (2) et/ou l'élément de rigidification (6) consistent en un matériau thermoplastique.

9. Partie d'habillage en plusieurs parties selon la revendication 8, **caractérisée en ce que** le matériau thermoplastique comprend du polypropylène ou du polyéthylène.

10. Véhicule à moteur avec une partie d'habillage en plusieurs parties selon l'une quelconque des revendications précédentes.
